# EUROPÄISCHE PATENTSCHRIFT

(11) **EP 2 311 768 B1**
(45) Veröffentlichungstag und Bekanntmachung des Hinweises auf die Patenterteilung: **10.07.2013**
(21) Anmeldenummer: 10182675.8
(22) Anmeldetag: 22.07.2005
(51) Int. Cl.: B66B 7/08, F16G 11/04

(54) **Tragmittelendverbindung zur Befestigung eines Endes eines Tragmittels in einer Aufzugsanlage und Verfahren zur Befestigung eines Endes eines Tragmittels in einer Aufzugsanlage**
Load bearing connection for attaching one end of a load bearer in a hoist installation and a method for attaching an end of a load bearer in a hoist facility
Liaison d'extrémité de moyen de portage destinée à la fixation d'une extrémité d'un moyen de portage dans une installation d'ascenseur et procédé de fixation d'une extrémité d'un moyen de portage dans une installation d'ascenseur

(30) Priorität: 13.09.2004 EP 04021671
(43) Veröffentlichungstag der Anmeldung: 20.04.2011
(62) Teilanmeldung aus: 08168046.4
(73) Patentinhaber: Inventio AG, 6052 Hergiswil NW (CH)
(72) Erfinder: Dold, Florian, 6037 Root (CH); Bissig, Adolf, 6374 Buochs (CH); Wirth, Manfred, 8193 Eglisau (CH); De Angelis, Claudio, 48161 Münster (DE); Ach, Ernst, 6030 Ebikon (CH)
(74) Vertreter: Hirschberger, Petra

(56) Entgegenhaltungen:
- EP-A- 1 446 348
- EP-B1- 1 252 086
- GB-A- 797 515
- US-A1- 2002 042 973
- US-A1- 2002 154 944
- US-A1- 2004 143 940

## Beschreibung

Die vorliegende Erfindung bezieht sich auf eine Aufzugsanlage mit einer Tragmittelendverbindung und einem Tragmittel.

Eine Aufzugsanlage gemäß dem Oberbegriff des Anspruchs 1 ist z.B. aus US-A-2002 0154944 bekannt.

Eine Aufzugsanlage besteht in der Regel aus einer Kabine und einem Gegengewicht, welche gegenläufig in einem Aufzugsschacht bewegt werden. Kabine und Gegengewicht sind mittels Tragmittel miteinander verbunden und getragen. Ein Ende des Tragmittels ist dabei mit einer Tragmittelendverbindung an der Kabine, bzw. am Gegengewicht oder im Aufzugsschacht befestigt. Der Ort der Befestigung richtet sich nach der Ausführungsart der Aufzugsanlage.

Die Tragmittelendverbindung muss dementsprechend die im Tragmittel wirkende Kraft zu der Kabine, bzw. dem Gegengewicht oder zu dem Aufzugsschacht übertragen. Sie muss derart ausgelegt sein, dass sie eine erforderliche Tragkraft des Tragmittels sicher übertragen kann.

Heute werden vermehrt Tragmittel verwendet bei denen mehrere Seile oder Seillitzen zu einem Tragmittel zusammengefügt werden. Das Tragmittel besteht dabei aus mindestens zwei in einem Abstand zueinander verlaufenden Seilen oder Seillitzen und einem gemeinsamen Seilmantel. Die Seile oder Seillitzen dienen dabei im Wesentlichen zum Übertragen von Trag und Bewegungskräften, und die Seilummantelung schützt die Seile, bzw., die Seillitzen vor äusseren Einflüssen und sie verbessert die Übertragungsfähigkeit von Antriebskräften welche von Antriebsmaschinen in die Tragmittel eingeleitet werden.

Bei bekannten Ausführungen wird das Tragmittel mittels eines Keils in einer Keiltasche festgehalten. Eine erste Keiltaschenfläche der Keiltasche ist hierbei entsprechend einer Zugrichtung des Tragmittels ausgeführt. Diese erste Keiltaschenfläche ist in der Abzugsrichtung des Tragmittels angeordnet. Eine zweite Keiltaschenfläche der Keiltasche ist entsprechend einem Keilwinkel des Keiles zur ersten Keiltaschenfläche verschoben ausgeführt. Das Tragmittel wird nun zwischen Keiltaschenflächen und Keil angeordnet und es zieht den Keil aufgrund der Reibungsverhältnisse in die Keiltasche, wodurch der Tragmittel festgehalten wird. Naturgemäss gleitet somit ein tragende Trumm des Tragmittels, während die Tragkraft aufgebaut wird, entlang der ersten Keiltaschenfläche, währenddem ein lose Trumm des Tragmittels in seiner Lage zur zweiten Keiltaschenfläche nur eine geringe Dehnbewegung erfährt. Im Folgenden wird die erste Keiltaschenfläche Keiltaschengleitfläche genannt und die zweite Keiltaschenfläche wird Keiltaschenhaftfläche genannt.

Aus WO 00/40497 ist eine Tragmittelendverbindung für ein mit elastomerer Umhüllung versehenem Tragmittel bekannt bei der ein Keiltaschenwinkel derart ausgeführt ist, dass die durch den Keil, bei einer gegebenen Länge und Breite, erzeugte Druckbelastung des Tragmittels kleinere Werte bewirkt als die zulässige Druckbelastung der elastomeren Umhüllung.
Ein Nachteil dieser Ausführung ist, dass einerseits die Krafteinleitung von der Tragmittelendverbindung zum Seilmantel des Tragmittels alleine durch die Geometrie des Keiles gelöst wird, dass jedoch die Übertragung der Kraft von der Ummantelung in die eigentlich tragenden Seil, bzw. Seillitzen nicht gelöst wird. Die Reibkoeffizienten innerhalb einer Seillitze oder eines Seiles sind in vielen Fällen geringer als vom Seilmantel zu den Anschlussteilen. Dies führt dazu, dass eine Seillitze oder ein Seil nur ungenügend innerhalb des Seilmantels gehalten wird, womit die zulässige Tragkraft des Tragmittels begrenzt wird.

Aufgabe der vorliegenden Erfindung ist es eine optimierte Tragmittelendverbindung bereitzustellen, welche die Tragkraft des Tragmittels maximiert und sicher überträgt sowie folgende Punkte erfüllt:
- die Krafteinleitung bis in die tragenden Seile, bzw. Seillitzen sicherstellt,
- die Gesamtspannungen im Tragmittel optimiert,
- eine lange Lebensdauer des Tragmittels gewährleistet,
- montagefreundlich und kostengünstig ist und
- im Bedarfsfalle auch erhöhten Umgebungstemperaturen widersteht.

Diese Aufgaben werden durch die Erfindung gemäss der Definition des Patentanspuchs 1 gelöst. Vorteilhafte Weiterbildungen sind in den abhängigen Ansprüchen beschrieben.
Die Erfindung betrifft eine Tragmittelendverbindung zur Befestigung eines Tragmittelendes in einer Aufzugsanlage und Verfahren zur Befestigung eines Tragmittels in einer Aufzugsanlage gemäss der Definition der Patentansprüche.
Die Aufzugsanlage besteht aus einer Kabine und einem Gegengewicht, welche gegenläufig in einem Aufzugsschacht bewegt werden. Kabine und Gegengewicht sind mittels Tragmittel miteinander verbunden und getragen. Das Tragmittel besteht aus mindestens einem Seil oder einer Seillitze und einem Seilmantel, welcher das Seil oder die Seillitze umschliesst. Die Seile bzw. Seillitzen sind aus Kunstfasern oder aus metallischem Werkstoff, vorzugsweise Stahldrähten hergestellt.
Mehrere dieser Tragmittel bilden gemeinsam einen Tragmittelstrang.

Ein Ende des Tragmittels ist mit einer Tragmittelendverbindung an der Kabine, bzw. Gegengewicht oder im Aufzugsschacht befestigt. Der Ort der Befestigung richtet sich nach der Ausführungsart der Aufzugsanlage. Das Tragmittel ist in der Tragmittelendverbindung mittels eines Keils, welcher das Tragmittel in einer Keiltasche fixiert, gehalten. Der die Keiltasche beinhaltende Teil der Tragmittelendverbindung wird durch ein Keilgehäuse gebildet. Das Tragmittel weist an seinem unbelasteten Ende einen losen Trumm auf. Dieser lose Trumm läuft auf eine zur vertikalen Richtung geneigte Keiltaschenhaftfläche auf und wird dort vom Keil, mittels seiner Keilhaftfläche, auf die Keiltaschenhaftfläche gepresst. Das Tragmittel ist weiter um einen Keilbogen geführt und verläuft zwischen einer gegenseitigen Keilgleitfläche und der Keiltaschengleitfläche, welche im Wesentlichen vertikal, bzw. in Zugrichtung des Tragmittels ausgerichtet ist, zum tragenden Trumm des Tragmittels. Die Zugkraft des Tragmittels wird somit durch die Pressung entlang der Keil- und Keiltaschenflächen und der Umschlingung des Keiles übertragen. Das Tragmittel ist mittels des Keiles in der Keiltasche gehalten und das Tragmittel verläuft zwischen Keil und Keiltasche.

Eine ertragbare Zugkraft des Tragmittels wird dabei massgeblich von der Gestaltung der sich berührenden Flächen und der Art des Kraftflusses von der Tragmittelendverbindung zur Ummantelung und den Seilen, bzw. den Seillitzen beeinflusst.

Erfindungsgemäss besteht der Seilmantel im Wesentlichen aus thermoplastischem Kunststoff oder Elastomer und ein Bereich des Keiles oder ein Bereich der Keiltasche ist mit einer Längskeilrille versehen und / oder ein Bereich des Keiles oder der Keiltasche oder der Seilmantel ist im Bereiche der Tragmittelendverbindung mit Reibwertreduzierenden Massnahmen versehen.

Die Längskeilrille ist im Wesentlichen in einem Bereich des Keiles bzw. der Keiltasche angeordnet, welcher in zusammengebauten Zustand der Tragmittelendverbindung in direktem Kontakt mit dem Tragmittel steht. Die im entsprechenden Keilbereich oder im Keiltaschenbereich vorgesehene Längskeilrille erhöht die auf das Tragmittel einwirkende Normalkraft derart, dass das Seil bzw. die Seillitze durch die Längskeilrille mit dem Seilmantel zusammengepresst wird und einem Gleiten der Seile bzw. der Seillitzen innerhalb des Seilmantels vorgebeugt wird. Die Abmessung der Längskeilrille kann dabei entsprechend den Erfordernissen geformt sein. Die Gestaltung der Längskeilrille folgt im Wesentlichen in Analogie zur Auslegung von Keilrillen einer Treibscheibe. Im Besonderen kann ein Längskeilrillenwinkel in Abstimmung mit der Tragmittelausführung gewählt werden.

Die Verwendung Reibwertreduzierender Massnahmen im Bereich des Keiles oder der Keiltasche oder des Seilmantels, im Bereiche der Tragmittelendverbindung bewirken, dass ein Nachziehen oder Nachgleiten des Tragmittels in der Tragmittelendverbindung gezielt stattfinden kann. Reibwertreduzierende Massnahmen können Gleitmittel sein welche auf Bereiche des Keiles, der Keiltasche und / oder des Tragmittels aufgetragen werden oder es können Beschichtungen, wie Beispielsweise Teflonbeschichtungen sein. Auch eine Herstellung des gesamten Keiles aus einem gleitfähigen Material ist möglich.

Insgesamt ermöglichen die erfindungsgemässen Lösungen, dass die Krafteinleitung vom Seilmantel in die tragenden Seile, bzw. Seillitzen sicherstellt wird, die Gesamtspannung im Tragmittel optimiert wird und eine lange Lebensdauer des Tragmittels gewährleistet werden kann.

Eine vorteilhafte Ausführung sieht vor, dass eine dem losen Trumm des Tragmittels näher liegende Keilhaftfläche oder Keiltaschenhaftfläche mit Längskeilrille versehen ist. Dies ist besonders Vorteilhaft, da bei Belastung des Tragmittels die durch das Einziehen des Keiles entstehende Presskraft des Keiles auf die Keiltasche in besonderem Masse die mögliche Rückhaltekraft im Tragmittel auf der Seite der Keiltaschenhaftfläche erhöht und das Seil, bzw. die Seillitze untereinander und mit dem Seilmantel zusammenpresst - da diese Fläche Längskeilrillen aufweist -, wodurch sich die max. mögliche Tragmittelkraft, als Folge der Umlenkung um den Keilbogen, erhöht. Die Kraft wird dabei kontinuierlich erhöht, da die Krafterhöhung auf der Seite des losen Trumms weiter aufgebaut wird. Zusätzlich kann die Keilrille über den Bogen des Keiles ausgeführt sein.

In einer weiteren Ausgestaltung ist die dem losen Trumm des Tragmittels näher liegende Keiltaschenhaftfläche und / oder Keilhaftfläche mit einer gegenüber der restlichen Oberfläche der Keiltasche, bzw. des Keiles erhöhten Rautiefe versehen, oder diese Flächen sind mit Querrillen oder Quernuten versehen. Dies ist Vorteilhaft, da bei Belastung des Tragmittels die durch das Einziehen des Keiles entstehende Presskraft des Keiles auf die Keiltasche in besonderem Masse die mögliche Tragkraft im Tragmittel auf der Seite der Keiltaschen- bzw. Keilhaftfläche erhöht - da diese Fläche eine erhöhte Rauheit, bzw. Querrillen oder Quernuten aufweist -, wodurch sich die max. mögliche Tragmittelkraft, als Folge der Umlenkung um den Keil, erhöht. Die Kraft wird dabei kontinuierlich erhöht, da die Initialkraft auf der Seite des losen Trumms aufgebaut wird. Der lose Trumm des Tragseiles wird sicher gehalten und es kann eine hohe Tragkraft übertragen werden. Zudem ist die Keiltaschengleitfläche, auf welcher das Tragmittel beim Belastungsvorgang vorwiegend gleitet, mit entsprechender geringerer Rauheit ausgeführt, was einer Beschädigung des Tragmittels entgegenwirkt, da dessen Oberfläche nicht verletzt wird. Mittels dieser Erfindung kann eine kostengünstige Tragmittelendverbindung mit hoher Traglast bereitgestellt werden.

Alternativ oder ergänzend ist eine dem tragenden Trumm des Tragmittels näher liegende Keilgleitfläche und / oder Keiltaschengleitfläche mit Reibwertreduzierenden Massnahmen versehen. Reibwertreduzierende Massnahmen sind beispielsweise ein Gleitspray, eine Zwischenlage aus gleitfähigem Kunststoff oder eine Oberflächenbeschichtung. Dies ermöglicht ein Gleiten des Tragmittels beim Belastungsvorgang was einer Beschädigung des Tragmittels auf der Zugbelasteten Seite der Tragmittelendverbindung entgegenwirkt, da dessen Oberfläche nicht verletzt wird und eine Belastung im Mantel und im Seil, bzw. Seillitze gleichmässig erfolgt. Mittels dieser Ausführung kann eine kostengünstige Tragmittelendverbindung mit hoher Traglast bereitgestellt werden.

Erfindungsgemäß weist eine dem tragenden Trumm des Tragmittels näher liegende Keilgleitfläche oder Keiltaschengleitfläche einen ersten und einen zweiten Flächenbereich auf, wobei der erste Flächenbereich bei der Zone des Auslaufs des Tragmittels aus der Tragmittelendbefestigung angeordnet ist und dieser erste Flächenbereich einen grösseren Keilwinkel aufweist als der zweite Flächenbereich, welcher an den ersten Flächenbereich anschliesst und welcher den Übergang zu einem weiteren Flächenbereich oder zum oberen Ende der Keiltaschenfläche bzw. der Keilfläche bildet. Vorteilhafterweise sind die Übergänge zwischen den einzelnen Flächenbereichen kontinuierlich ausgeführt. In einer optimierten Ausführung sind die Flächenbereiche derart ausgeführt, dass ein Übergang vom ersten zum n-ten Flächenbereich kontinuierlich, d.h. entsprechend einer Übergangskontur verläuft, wobei der n-te Flächenbereich den Hauptpressbereich bestimmt.

Diese Lösungen bewirken eine kontinuierliche Abnahme der Pressung des Tragmittels über eine definierbare Auslaufstrecke des Tragmittels aus der Tragmittelendverbindung. Vorteilhafterweise erstreckt sich dieser Flächenbereich über weniger als 50% der gesamten Keil- bzw. Keiltaschengleitfläche. Das Tragmittel erfährt keine sprunghaften Belastungsübergänge. Dies erhöht die Lebensdauer des Tragsystems.
Weiter sind die zugseilseitigen Enden der Keilgleitfläche und der Keiltaschengleitfläche vorteilhafterweise mit Radien versehen oder kurvenförmig geformt. Die Verwendung eines Radius oder von kurvenförmigen Übergängen bewirkt, dass eine Pressung des Tragmittels allmählich aufgebaut wird. Es werden keine sprunghaften Spannungsänderungen erzwungen und ein Gleiten des Tragmittels in der hochbelasteten Zugzone des Tragmittels wird ohne Beschädigung des Tragmittels ermöglicht.
Alternativ ist der Keil an seinem keifförmigen Ende, federnd ausgeführt ist. Dies führt zu einer langsamen Reduktion der Presskraft des Tragmittels. Auch dadurch erfährt das Tragmittel keine sprunghaften Belastungsübergänge. Dies erhöht die Lebensdauer des Tragsystems.

In einer weitergehenden Ausführung ist die Keilhaftfläche des losen Trumms mit der Keilgleitfläche des tragenden Trumms am oberen Ende des Keiles mittels dem Keilbogen verbunden und dieser Keilbogen schliesst tangential an die beidseitigen Keilflächen an, wobei in der erfindungsgemässen Ausführung der Krümmungsradius des Bogens zur Keilhaftfläche des losen Trumms hin kleiner wird. Ein kleinerer Krümmungsradius bewirkt eine grössere Krümmung des Tragmittels und indiziert dadurch grössere Verformungsspannungen im Tragmittel selbst. Im Gegenzug nimmt gleichzeitig die im Tragmittel wirkende Zugkraft, entsprechend dem Eytelwein'schen Umschlingungsgesetz zum losen Trumm hin ab, was abnehmende Zugspannungen im Tragmittel bewirkt. Ansteigende Verformungsspannungen stehen somit abnehmenden Zugspannungen gegenüber und kompensieren sich im Idealfalle. Dies bewirkt eine Optimierung der Gesamtspannung im Tragmittel und verlängert die Lebensdauer des Tragmittels insgesamt.

In einer weiteren Ausgestaltung ist der Keil aus einem im Vergleich zu Stahl weichem Material - einem Material mit geringem E-Modul -, vorzugsweise Aluminium, Kunststoff oder einem Metall-Kunststoffverbund besteht. Die Verwendung eines weichen Materials bewirkt ein ausgleichen von Pressungsspitzen und schont dementsprechend das Tragmittel. Bei Verwendung eines Metall-Kunststoffverbundes eröffnet sich zudem die Möglichkeit spezielle Gleiteigenschaften zu verwirklichen. Mit der Verwendung von Materialien mit geringen E-Modulen lässt sich der Steifigkeitssprung zwischen Keil bzw. dem Gehäuse und dem Tragmittel reduzieren, was in einer gesteigerten Tragkraft resultiert.

Ergänzend kann die Keiltaschenfläche mittels einer Einlegeplatte ausgeführt sein. Damit kann eine Basisausführung einer Tragmittelendverbindung bereitgestellt werden, welche abhängig von einer Ausführung des Tragmittels mit einer entsprechenden Einlegeplatte ergänzt werden kann oder die Einlegeplatte kann Anforderungsgemäss mit Keilrillen, Querrillen, Quernuten oder gleitend ausgeführt sein.

Eine vorteilhafte Tragmittelendverbindung der gezeigten Art ergibt sich bei der Verwendung eines Tragmittels in der Form eines Mehrfachseiles. Das Tragmittel besteht dabei aus mindestens zwei in einem Abstand zueinander verlaufenden Seilen oder Seillitzen und der Seilmantel umschliesst den Seil- oder Seillitzenverbund und er trennt die einzelnen Seile oder Seillitzen voneinander. Das Tragmittel weist dabei eine Längsstruktur, vorzugsweise Längsrillen, auf.
Die Längsstruktur kann ein Abbild eines einzelnen Seiles, bzw. Seillitze sein oder eine Gruppe von Seilen, bzw. Seillitzen kann in eine Längsstruktur eingepasst sein. Der Seilmantel kann dabei je nach gewünschter Rillenstruktur speziell profiliert sein. Eine allfällige Ausführung der Keiltasche oder des Keils ist vorzugsweise auf die Arte der Längsstruktur ausgerichtet. Dies ermöglicht die Bereitstellung einer besonders kostengünstigen Tragmittelendverbindung.
Besonders Vorteilhaft ist ein Ende des dargestellten Tragmittels, bzw. des Mehrfachseiles auf einzelne Seil-, bzw. Seillitzentrumms aufgetrennt, und jeweils ein Seil-, bzw. Seillitzentrumm ist mittels einer zugeordneten Längskeilrille des Keiles, bzw. der Keiltasche geklemmt.
Dies erlaubt eine besonders gute Krafteinleitung der Tragmittelkraft in die Tragmittelendverbindung.
Die Auftrennung des Tragmittels in einzelne Seil-, bzw. Seillitzentrumms kann manuell, beispielsweise durch schneiden oder reissen erfolgen oder sie kann zwangsläufig durch einen Mittelsteg, der durch die Bildung der Längsrillen auf der Keilfläche oder Keiltaschenfläche entsteht, erfolgen.

In einer bevorzugten Tragmittelendverbindung ist das Seil, bzw. die Seillitze im Bereiche der Tragmittelendverbindung mit dem Seilmantel verklebt, verschmolzen oder mechanisch verbunden. Die Verklebung, Verschmelzung oder mechanische Verbindung des Seiles, bzw. der Seillitzen untereinander und mit dem Seilmantel bewirkt, dass keine Relativbewegung innerhalb des Tragmittels stattfinden kann. Eine Verklebung erfolgt beispielsweise indem eine vordefinierte Menge Flüssigklebstoffam Ende des Tragmittels in die einzelnen Seile bzw. Seillitzen geträufelt oder gegossen wird. Der Klebstoff zieht, bedingt durch Schwerkraft und Kapillarwirkung zwischen Seil bzw. Seillitze und Ummantelung ein und verbindet diese Teile dauerhaft.

Weitere Vorteilhafte Ausführungen sind in den weiteren abhängigen Ansprüchen beschrieben.

Im Folgenden werden die Erfindung und weiter Vorteilhafte Ausführungen anhand beispielhafter Ausführungsformen gemäss den **Fig. 1 bis 12** im Detail erläutert. Hierbei zeigen:
- **Fig. 1:**: eine Aufzugsanlage, mit Unterschlingung, mit im Aufzugsschacht befestigter Tragmittelendbefestigung.
- **Fig. 2:**: eine Aufzugsanlage, direkt aufgehängt, mit an einer Kabine, bzw. einem Gegengewicht befestigter Tragmittelendbefestigung.
- **Fig. 3:**: Beispiel einer Tragmittelendbefestigung welche an einer Kabine bzw. an einem Gegengewicht befestigt ist, mit nach oben wirkender Abzugskraft.
- **Fig. 4:**: Beispiel einer Tragmittelendbefestigung welche im Schacht befestigt ist, mit nach unten wirkender Abzugskraft.
- **Fig. 5:**: Beispiel eines Tragmittels mit beabstandeten Seilen
- **Fig. 6:**: Beispiel eines Tragmittels mit beabstandeten Seillitzen
- **Fig. 7:**: Beispiel einer Tragmittelendverbindung, nicht Teil der Erfindung
- **Fig. 8:**: Detail einer Tragmittelendbefestigung mit am Keil angeordneten Längskeilrillen und einem in Einzelstränge aufgeteilten riemenförmigen Tragmittel.
- **Fig. 8a:**: Detail einer Tragmittelendbefestigung mit an einer Keiltasche angeordneten Längskeilrillen und einem in Einzelstränge aufgeteilten riemenförmigen Tragmittel.
- **Fig. 8c:**: Detail einer Tragmittelendbefestigung mit an einer Keiltasche angeordneten Längskeilrillen und einem riemenförmigen Tragmittel mit geschmolzener Ummantelung.
- **Fig. 9:**: Detail einer Tragmittelendbefestigung mit an einem Keil angeordneten Längskeilrillen und einem in Einzelstränge aufgeteilten Tragmittel.
- **Fig. 9a:**: Detail einer Tragmittelendbefestigung mit an einer Keiltasche angeordneten Längskeilrillen und einem in Einzelstränge aufgeteilten Tragmittel.
- **Fig. 10:**: Eine Erfindungsgemäße Tragmittelendverbindung mit mehreren Keilgleitflächenbereichen und einem mechanisch verbundenen Tragmittelende
- **Fig. 11:**: Eine Tragmittelendverbindung mit Einlegeplatte, nicht Teil der Erfindung
- **Fig. 12**:: Einen Keil zu einer Tragmittelendverbindung mit federnd ausgeführtem keilende und beschichteter Oberfläche sowie variablem Radius am Keilbogen, nicht Teil der Erfindung.

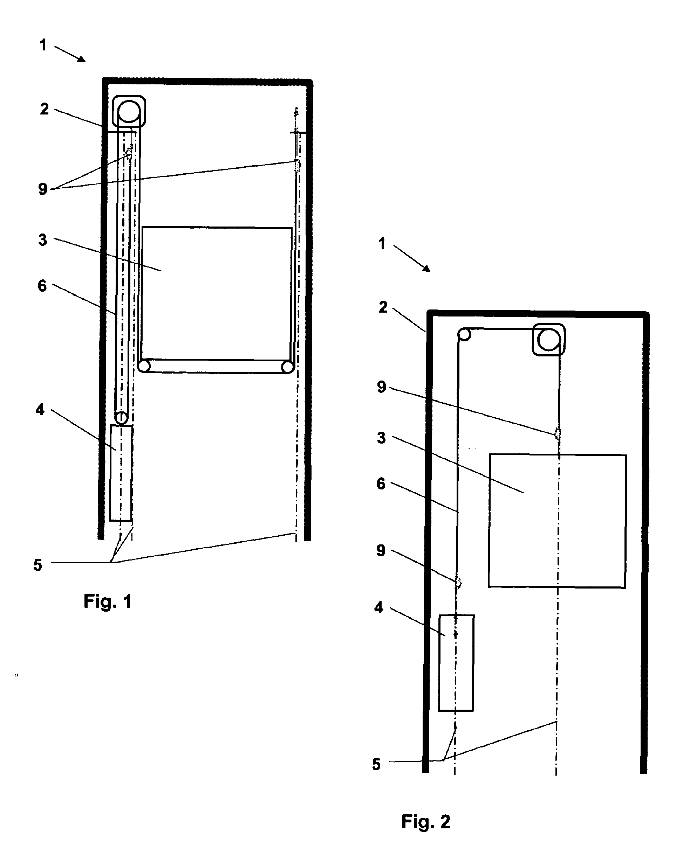

Eine Aufzugsanlage 1 besteht, wie in den Fig. 1 und 2 dargestellt aus einer Kabine 3 und einem Gegengewicht 4, welche gegenläufig in einem Aufzugsschacht 2 bewegt werden. Kabine 3 und Gegengewicht 4 sind mittels Tragmittel 6 miteinander verbunden und getragen. Ein Ende des Tragmittels 6 ist mit einer Tragmittelendverbindung 9 an der Kabine 3, bzw. Gegengewicht 4, gemäss Fig. 2, oder im Aufzugsschacht 2, gemäss Fig. 1, befestigt. Der Ort der Befestigung richtet sich nach der Ausführungsart der Aufzugsanlage 1. Fig. 1 zeigt hierbei eine 2:1 aufgehängte Aufzugsanlage und Fig. 2 zeigt eine 1:1 aufgehängte Aufzugsanlage.

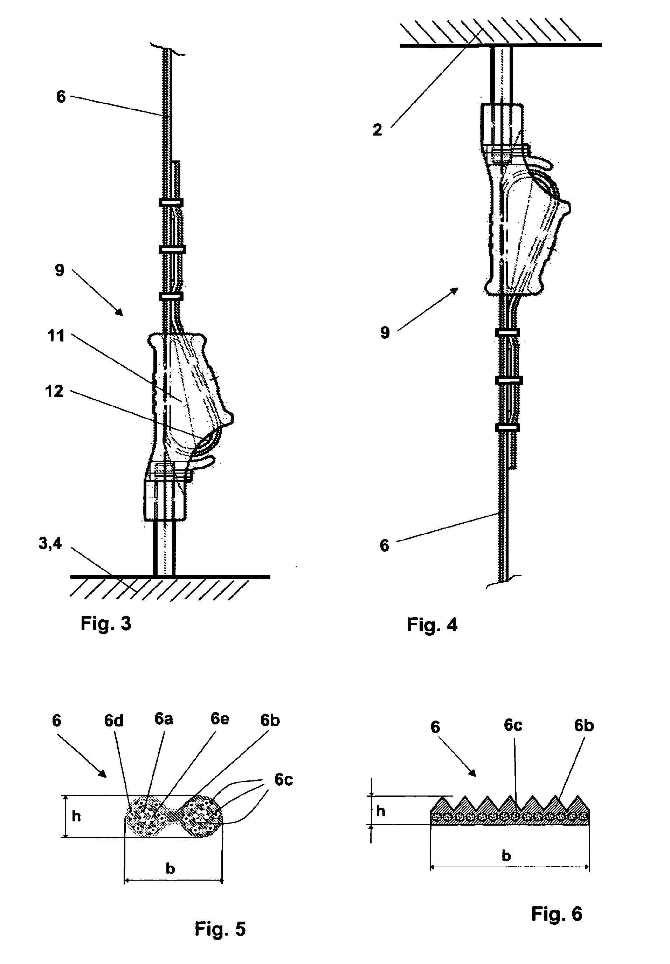

In den Fig. 3 und 4 ist ersichtlich wie das Tragmittel 6 in der Tragmittelendverbindung 9 mittels eines Keils 12, welcher den Tragmittel in einer Keiltasche 11 fixiert, gehalten wird. Die Tragmittelendbefestigung 9 kann in verschiedener Einbaulage montiert sein. In Fig. 3 ist die Abzugsrichtung nach oben gerichtet. In Fig. 4 ist die Abzugsrichtung nach unten gerichtet wie es in der Regel bei einer umgehängten Aufzugsanlage nach Fig. 1 angewendet ist.

Fig. 5 zeigt ein Tragmittel 6 in der Form eines "Twin-ropes". Hierbei sind einzelne Litzen 6c , welche im dargestellten Beispiel aus Kunstfasern hergestellt sind zu einem mehrlagigen Seil 6a verseilt. Das Seil 6a ist von einem thermoplastischen oder einem elastomeren Seilmantel 6b umfasst. Ein äusserer Seillitzenkranz 6d ist hierbei in der Regel mit dem Mantel 6b flächig verbunden. Um ein biegbares Seil zu erhalten sind die inneren Seillitzenkränze 6e lediglich durch den Verseilvorgang verbunden. Im dargestellten Beispiel sind zwei derartige Seile 6a in einem Abstand zueinander angeordnet und durch einen gemeinsamen thermoplastischen oder elastomeren Seilmantel 6b umfasst.

Fig. 6 zeigt ein Tragmittel 6 in der Form eines Keilrippenriemens bei dem mehrere Seillitzen 6c von einem thermoplastische oder einem elastomeren Mantel 6b umgeben sind, wobei die Keilrippen die zur Erzeugung einer Treibfähigkeit erforderliche Profilierung bilden. Jeweils ein Doppelstrang von Seillitzen 6c sind im dargestellten Beispiel einer Rippe zugeordnet.

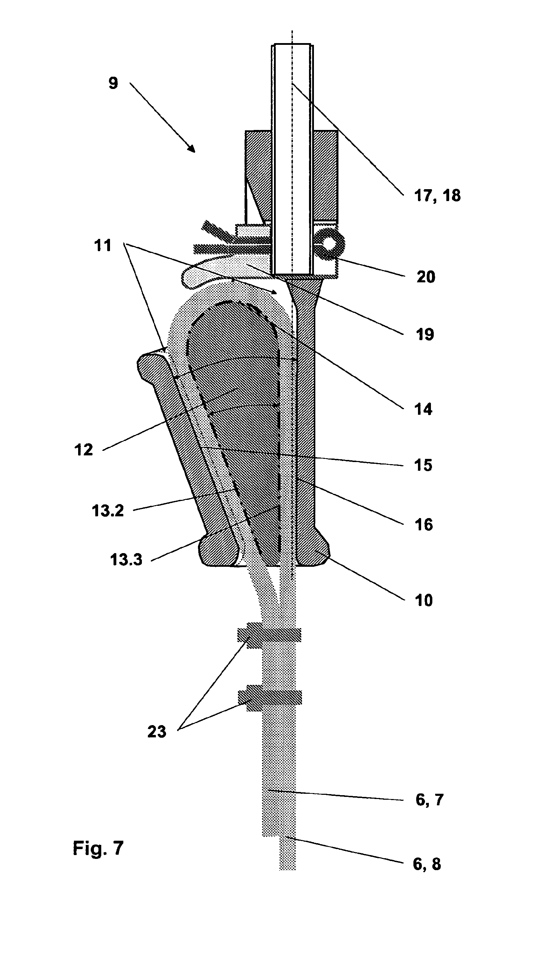

Fig. 7 zeigt den grundsätzlichen Aufbau einer Tragmittelendverbindung. Ein Ende des Tragmittels 6 ist mit der Tragmittelendverbindung 9 an der Kabine, bzw. Gegengewicht oder im Aufzugsschacht befestigt. Das Tragmittel 6 ist in der Tragmittelendverbindung 9 mittels eines Keils 12, welcher das Tragmittel 6 in einer Keiltasche 11 fixiert, gehalten. Der die Keiltasche 11 beinhaltende Teil der Tragmittelendverbindung 9 wird durch ein Keilgehäuse10 gebildet. Das Tragmittel 6 weist an seinem unbelasteten Ende einen losen Trumm 7 auf. Dieser lose Trumm 7 läuft auf eine zur vertikalen Richtung geneigte Keiltaschenhaftfläche 15 auf und wird dort vom Keil 12, mittels seiner Keilhaftfläche 13.2, auf die Keiltaschenhaftfläche 15 gepresst. Das Tragmittel 6 ist weiter um einen Keilbogen 14 geführt und verläuft zwischen einer gegenseitigen Keilgleitfläche 13.3 und einer Keiltaschengleitfläche16, welche im Vorteilhafterweise vertikal, bzw. in Zugrichtung des Tragmittels 6 ausgerichtet ist, zum tragenden Trumm 8 des Tragmittels 6. Die Zugkraft des Tragmittels 6 wird somit durch die Pressung entlang der Keil- und Keiltaschenflächen 13.2, 13.3, 15, 16 und der Umschlingung des Keilbogens 14 aufgebracht. Das Tragmittel 6 ist mittels des Keiles 12 in der Keiltasche 11 gehalten und das Tragmittel 6 verläuft zwischen Keil 12 und Keiltasche 11.

Eine ertragbare Zugkraft des Tragmittels wird dabei massgeblich von der Gestaltung der sich berührenden Flächen und der Art des Kraftflusses von der Tragmittelendverbindung 9 zur Ummantelung des Seiles, bzw. der Seillitzen beeinflusst.

Der Keil ist im dargestellten Beispiel mittels einer Zugstange 17 zu einem Anbindungspunkt verbunden. Im Weiteren ist der Keil 12 mittels einer Verliersicherung 19 und Splint 20 gegen ein Herausrutschen gesichert und der lose Trumm 7 ist mittels Plastikbindern 23 zum tragenden Trumm 8 fixiert.

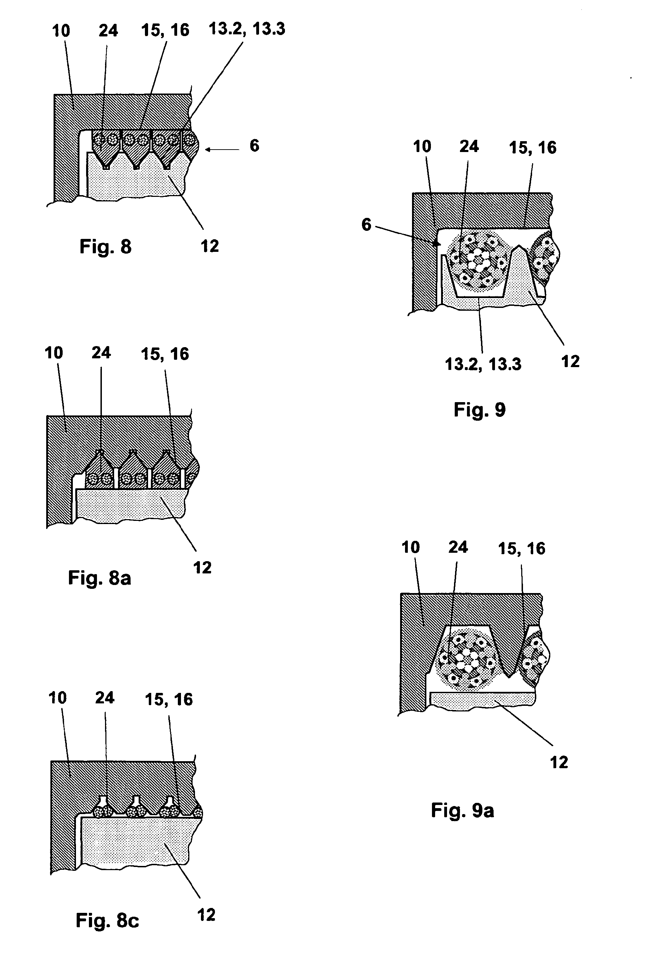

Fig. 8, 8a, 8c, Fig. 9 und 9a zeigen beispielhafte Ausführungen der Keiltaschen- und Keilflächen.

In Fig. 8 ist die Keiltaschenfläche 15, 16 des Gehäuses 10 im Wesentlichen glatt ausgeführt und die Keilfläche 13.2, 13.3 ist mit Längskeilrillen versehen. Die Längskeilrillen sind entsprechend einer Profilierung des Tragmittels 6 ausgeführt. Das Tragmittel 6 ist im Bereiche der Längskeilrillen des Keiles 12 auf einzelne Tragmittelstränge 24 aufgeteilt. Im gezeigten Beispiel sind jeweils zwei Seillitzen 6c einem Tragmittelstrang 24 zugeordnet. Das Tragmittel 6 wird durch die Rillenpressung hervorragend gepresst und eine Haltekraft kann dadurch über den Mantel des Tragmittels in die Seillitzen übertragen werden.

Fig. 8a zeigt eine ähnliche Lösung, bei der jedoch die Keiltaschenfläche 15, 16 des Gehäuses 10 mit Längskeilrillen versehen ist und die Keilfläche 13.2, 13.3 im Wesentlichen glatt ausgeführt ist. Die Längskeilrille ist vorteilhafterweise an der Keiltaschenhaftfläche 15 angeordnet. Dadurch ergibt sich eine optimale Haftung des Tragmittels beim losen Trumm 7 des Tragmittels 6. Besonders Vorteilhaft erweist sich bei dieser Lösung, wie in Fig. 8c dargestellt, dass Seillitzen 6c des Tragmittels 6 auch geklemmt werden können, wenn der Seilmantel 6b, beispielsweise wegen Brandeinwirkung, schmilzt.

In Fig. 9 ist die Keiltaschenfläche 15, 16 des Gehäuses 10 im Wesentlichen glatt ausgeführt und die Keilfläche 13.2, 13.3 ist mit Längskeilrillen versehen. Die Längskeilrillen sind ähnlich der Keilrille einer Traktionsscheibe ausgeführt. Das Tragmittel 6 ist im Bereiche der Längskeilrillen des Keiles 12 auf einzelne Tragmittelstränge 24 aufgeteilt. Im gezeigten Beispiel ist jeweils ein Seil 6a einem einzelnen Tragmittelstrang 24 zugeordnet. Das Tragmittel 6 wird durch die Rillenpressung hervorragend gepresst und eine Haltekraft kann dadurch über den Mantel des Tragmittels in die Seillitzen übertragen werden.

Fig. 9a zeigt eine ähnliche Lösung, bei der jedoch die Keiltaschenfläche 15, 16 des Gehäuses 10 mit Längskeilrillen versehen ist und die Keilfläche 13.2, 13.3 im Wesentlichen glatt ausgeführt ist. Die Längskeilrille ist vorteilhafterweise an der Keiltaschenhaftfläche 15 angeordnet. Dadurch ergibt sich eine optimale Haftung des Tragmittels beim losen Trumm 7 des Tragmittels 6.

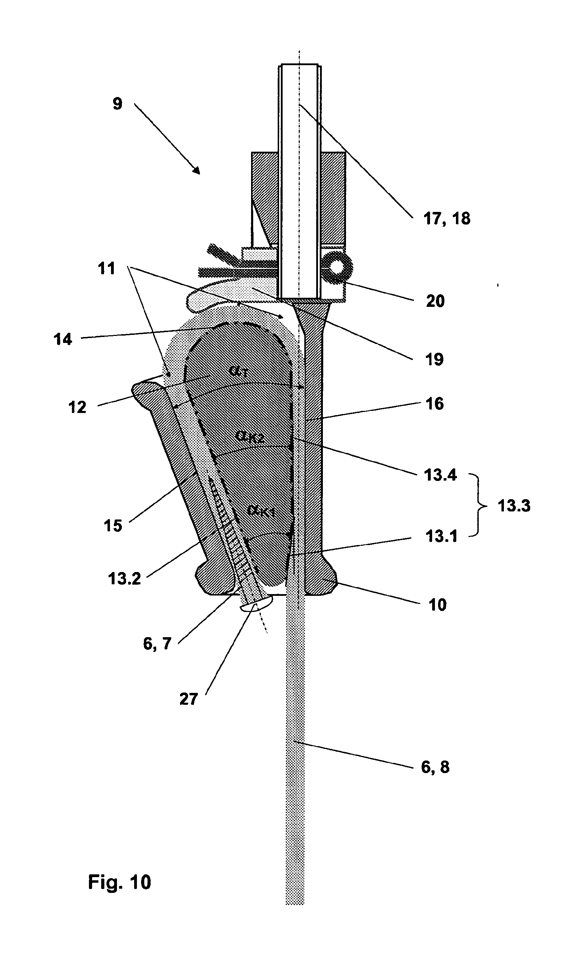

Fig. 10 zeigt ein Beispiel einer ausgeführten Tragmittelendverbindung 9 gemäß der Erfindung. Das Tragmittel 6 ist an seinem Ende wie in Fig. 9 gezeigt in einzelne Tragmittelstränge 24 aufgeteilt. Das Seil ist an seinem Ende, bzw. am Ende des losen Trumms 7 unter Verwendung einer Schraube 27, beispielsweise einer Holzschraube, mechanisch mit dem Seilmantel verbunden. Beim Eindrehen der Schraube 27, in das Ende des Tragmittelstranges 24, erfolgt eine Quetschung des Endfasern des Seiles. Dadurch wird die durch den Keil 12 erwirkte Presskraft erhöht und die Kraftübertragung vom Seilkern zum Mantel wird erhöht. Im Weiteren verhindert der Schraubenkopf ein Ausreissen des Tragmittels, indem er am Keil 12, bzw. am Gehäuse 10 ansteht. Diese erhöht die maximal ertragbare Zugkraft im Tragmittel zusätzlich.

Der in Fig. 10 verwendete Keil 12 weist zudem die dem tragenden Trumm 8 des Tragmittels 6 näher liegende Keilgleitfläche einen ersten Flächenbereich 13.1 und einen zweiten Flächenbereich 13.4 auf, wobei der erste Flächenbereich 13.1 bei der Zone des Auslaufs des Tragmittels 6 aus der Tragmittelendbefestigung 9 angeordnet ist und dieser erste Flächenbereich 13.1 einen grösseren Keilwinkel α_{K1} aufweist als der zweite Flächenbereich 13.4, welcher an den ersten Flächenbereich 13.1 anschliesst und welcher in diesem Beispiel das oberen Ende der Keilfläche bildet. Selbstverständlich sind viele Gestaltungen dieser Keilform möglich. Es können mehrere oder viele Teilflächenbereiche anschliessend aneinander angeordnet werden oder es können indefinite kleine Flächenbereiche verwendet werden, wodurch sich eine kontinuierliche Kurve ergibt. Im Weiteren weist die dargestellte Tragmittelendverbindung einen Verlierschutz 19 auf der den Keil 12 in der Keiltasche 11 sichert.

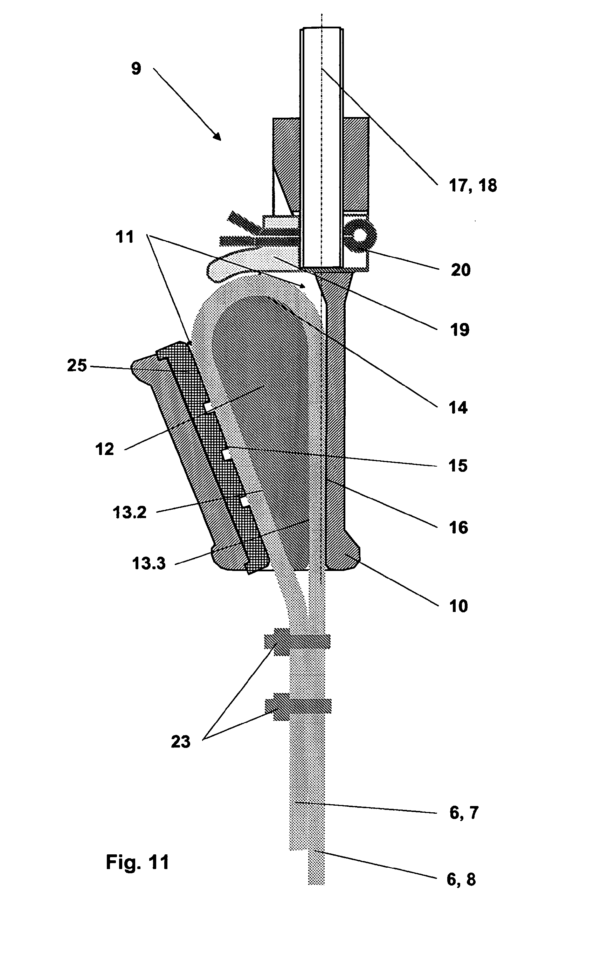

Fig.11 zeigt eine Tragmittelendverbindung, bei der die Keiltaschenfläche 15 mittels eines Einlegeteiles ausgeführt ist. Dies ist vorteilhaft, da das Gehäuse 10 für verschiedene Tragmittel verwendet werden kann, indem lediglich die Einlegeplatten variiert werden.

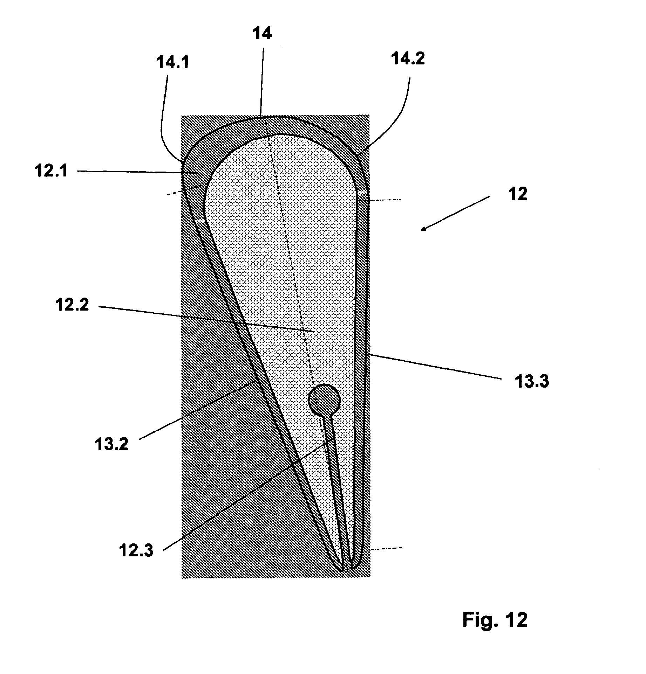

Fig.12 zeigt eine vorteilhafte Ausführung des Keiles 12. Der Keil 12 weist einen Keilkern 12.2 auf der Beispielsweise aus Stahl gefertigt ist. Der Keilkern 12.2 weist an seinem unteren Ende einen Einschnitt 12.3 auf. Der Einschnitt 12.3 bewirkt, dass der untere Endbereich des Keiles 12 gefedert ist. Der untere Bereich der Keilfläche 13.3 ist somit federnd ausgeführt und eine durch den Keil bewirkte Pressung verringert sich in Richtung des unteren Endes des Keiles 12. Der Keilkern 12.2 weist eine Beschichtung 12.1 auf, welche die Keilflächen definiert, welche mit dem Tragmittel 6 (in dieser Figur nicht dargestellt) in Kontakt steht. Die Beschichtung 12.1 ist vorteilhafterweise aus einem Gleitfähigen Kunsthoffartigem Material. Die Beschichtung 12.1 ist beispielsweise nach dem Bedarf der Tragmittelkontur geformt. Der Keilbogen 14 ist in mehrer Radienabschnitte aufgeteilt. Ein erster Radienabschnitt 14.1 schliesst im dargestellten Beispiel an die Keilhaftfläche 13.2 an. Der Radienabschnitt 14.1 weist einen kleinen Radius auf, der zur Keilgleitfläche 13.3 hin an einen grösser werdenden Radienabschnitt 14.2 anschliesst.

Die gezeigten Beispiele sind Ausführungsbeispiele. Die verschiedenen Ausführungen sind kombinierbar. So kann die in Fig. 11 dargestellte Einlegeplatten mit Keilausführungen gemäss Fig. 10 oder 12 kombiniert werden, die Einlegeplatte kann beschichtet sein oder die Einlegeplatte kann auch auf der Seite des tragenden Trumms angeordnet werden. Selbstverständlich können bei Kenntnis der vorliegenden Erfindung die gesetzten Formen und Anordnungen beliebig verändert werden. So kann beispielsweise die Tragmittelendverbindung auch in einer horizontalen Einbaulage verwendet werden.

## Patentansprüche

1. Aufzugsanlage mit einer Tragmittelandverbindung (9) und einem Tragmittel (6),
das Tragmittel (6) besteht aus einem Seil (6a) oder Seillitzen (6c) und einem Seilmantel (6b), welcher das Seil (6a), bzw. die Seillitze (6c) umschliesst, der Seilmantel (6b) besteht Im Wesentlichen aus Thermoplast oder Elastomer,
die Tragmittelendverbindung (9) weist ein Keilgehäuse (10) mit einer Keiltasche (11) und einen Keil (12) auf,
das Tragmittel (6) verläuft zwischen dem Keil (12) und der Keiltasche (11), wobei das Tragmittel (6) an seinem unbelasteten Ende einen losen Trumm (7) aufweist, das Tragmittel (6) ausgehend vom losen Trumm (7) um den Keil (12) geführt ist und zwischen einer Keilgleitfläche (13.3) und einer Keiltaachengleüfläche (16) zu einem tragenden Trumm (8) des Tragmittel (6) verläuft, und das Tragmittel (6) mittels des Keils (12) in der Keiltasche (11) gehalten Ist, **dadurch gekennzeichnet.**
**dass** die dem tragenden Trumm (6) des Tragmittels (6) näher liegende Keilgleitfläche (13.3) einen ersten Flächenbereich (13.1) und einen zweiten Flächenbereich (13.4) aufweist, wobei der erste Flächenbereich (13.1) bei der Zone des Auslaufs des Tragmittels (6) aus der Tragmittelendbefestigung (9) angeordnet ist und dieser erste Flächenbereich (13.1) einen grösseren Keilwinkel (α_{K1}) aufweist als der zweite Flachenbereich (13.4), welcher an den ersten Flächenbereich (13.1) anschliesst und welcher den Übergang zu einem welteren Flächenbereich oder zu einem oberen Ende der Keilfläche (13.3) bildet, so dass eine Pressung des Tragmittels (6) über eine Auslaufstrecke des Tragmittels (6) aus der Tragmittel-endverbindung (9) Kontinuierlich abnimmt.

2. Aufzugsanlage gemäss Anspruch 1 **dadurch gekennzeichnet,**
**dass** ein Bereich des Keiles (12) oder ein Bereich der Keiltasche (11) mit einer Längskeilrille versehen ist, wobei
- eine dem losen Trumm (7) des Tragmittels (6) näher liegende Keilhaftfläche (13.2) oder Keiltaschenhaftfläche (15) mit Längskeitrille versehen ist und / oder,
- die dem losen Trumm (7) des Tragmittels (6) näher liegende Kelltaschenhaftfläche (16) und / oder Keilhaftfläche ( 13.2) mit einer gegenüber der restlichen Oberfläche der Keiltasche (11) erhöhten Rautiefe versehen ist und / oder,
- die dem losen Trumm (7) des Tragmittels (6) näher liegende Keiltaschenhaftfläche (15) und /oder Keilhaftfläche (13.2) mit Querrillen oder Quernuten versehen ist und / oder,
- die dem tragenden Trumm (8) des Tragmittels (6) näher liegende Keilgleitfläche (13.3) oder Keiltaschengleitfläche (16) mit reibwert-reduzierenden Massnahmen versehen ist

3. Aufzugsanlage gemäss einem der vorangehenden Ansprüche **dadurch gekennzeichnet,**
- **dass** die zugseilseitigen Enden der Keilgleitfläche (13.3) und der Keiltaschengleitfläche (16) mit Radien versehen sind und / oder,
- **dass** der Keil (12), vorzugsweise an seinem keilförmigen Ende, federnd ausgeführt ist.

4. Aufzugsanlage gemäss einem der vorangehenden Ansprüche **dadurch gekennzeichnet,**
**dass** die Keilhaftfläche (13.2) des losen Trumms (7) mit der Keilgleitfläche (13.3) des tragenden Trumms (8) am oberen Ende des Keiles (12) mittels Keilbogen (14) verbunden ist, welcher tangential an die beidseitigen Keilflächen (13.2, 13.3) anschliesst und der Krümmungsradius des Bogens (14) zur Keilhaftfläche (13.3) des losen Trumms (7) hin abnimmt.

5. Aufzugsanlage gemäss einem der vorgängigen Ansprüche **dadurch gekennzeichnet, dass**
der Keil (12) aus einem im Vergleich zu Stahl weichem Material, vorzugsweise Aluminium, Kunststoff oder einem Metall-Kunststoffverbund besteht.

6. Aufzugsanlage gemäss einem der vorgängigen Ansprüche **dadurch gekennzeichnet, dass**
die Keiltaschenfläche (15,16) mittels einer Einlegeplatte (25) ausgeführt ist.

7. Aufzugsanlage gemäss einem der vorgängigen Ansprüche **dadurch gekennzeichnet, dass** das Tragmittel (6) aus mindestens zwei In einem Abstand zueinander verlaufenden Seilen (6a) oder Seillitzen (6c) besteht und der Seilmantel (6b) die einzelnen Seile (6a) oder Seillitzen (6c) voneinander trennt, wobei das Tragmittel (6) eine Längsstruktur, vorzugsweise Längsrillen, aufweist.

8. Aufzugsanlage gemäss einem der vorgängigen Ansprüche **dadurch gekennzeichnet, dass**
ein Ende des Tragmittels (6) auf einzelne Seil-, bzw. Seillitzentrumms (24) aufgetrennt ist, und dass jeweils der Seil-, bzw. Seillitzentrumm (24) mittels einer zugeordneten Längskeilrille des Keiles (12), bzw. der Keiltaschen (11) geklemmt ist.

9. Aufzugsanlage gemäss einem der vorgängigen Ansprüche **dadurch gekennzeichnet,**
**dass** das Seil, bzw, die Seillitze (24) im Bereiche der Tragmittelendverbindung (9) mit dem Seilmantel (6b) verklebt, verschmolzen oder mechanisch verbunden ist.

## Claims

1. Elevator installation with a suspension means end connection (9) and a suspension means (6),
the suspension means (6) consists of a cable (6a) or cable strands (6c) and a cable jacket (6b), which encloses the cable (6) or the cable strand (6c),
the cable jacket (6b) consists substantially of a thermoplastic or an elastomer,
the suspension means end connection (9) has a wedge housing (10) with a wedge pocket (11) and a wedge (12),
the suspension means (6) runs between the wedge (12) and the wedge pocket (11), wherein the suspension means (6) has a loose run (7) at its unloaded end, the suspension means (6) is guided from the loose run (7) around the wedge (12) and runs between a wedge sliding surface (13.3) and a wedge pocket sliding surface (16) to a supporting run (8) of the suspension means (6), and the suspension means (6) is held in the wedge pocket (11) by means of the wedge (12), **characterized in that** the wedge sliding surface (13.3) lying closer to the supporting run (8) of the suspension means (6) has a first surface region (13.1) and a second surface region (13.4), wherein the first surface region (13.1) is arranged at the zone of the runout of the suspension means (6) from the suspension means end attachment (9) and this first surface region (13.1) has a greater wedge angle (α_{K1}) than the second surface region (13.4), which adjoins the first surface region (13.1) and which forms the transition with respect to a further surface region or with respect to an upper end of the wedge surface (13.3), so that a pressing effect of the suspension means (6) decreases continuously over a runout section of the suspension means (6) from the suspension means end connection (9).

2. Elevator installation according to Claim 1, **characterized**
**in that** a region of the wedge (12) or a region of the wedge pocket (11) is provided with a longitudinal wedge groove, wherein
- an adhering wedge surface (13.2) or adhering wedge pocket surface (15) lying closer to the loose run (7) of the suspension means (6) is provided with a longitudinal wedge groove and/or
- the adhering wedge pocket surface (15) and/or adhering wedge surface (13.2) lying closer to the loose run (7) of the suspension means (6) is provided with a depth of roughness that is increased in comparison with the remaining surface of the wedge pocket (11) and/or
- the adhering wedge pocket surface (15) and/or adhering wedge surface (13.2) lying closer to the loose run (7) of the suspension means (6) is provided with transverse grooves or transverse slots and/or
- the wedge sliding surface (13.3) or wedge pocket sliding surface (16) lying closer to the supporting run (8) of the suspension means (6) is provided with friction-reducing measures.

3. Elevator installation according to one of the preceding claims, **characterized**
- **in that** the ends of the wedge sliding surface (13.3) and of the wedge pocket sliding surface (16) on the traction cable side are provided with radii and/or
- **in that** the wedge (12) is of a sprung design, preferably at its wedge-shaped end.

4. Elevator installation according to one of the preceding claims, **characterized in that** the adhering wedge surface (13.2) of the loose run (7) is connected to the wedge sliding surface (13.3) of the supporting run (8) at the upper end of the wedge (12) by means of a wedge arc (14), which follows on tangentially from the wedge surfaces (13.2, 13.3) on both sides, and the radius of curvature of the arc (14) decreases towards the adhering wedge surface (13.3) of the loose run (7).

5. Elevator installation according to one of the preceding claims, **characterized in that** the wedge (12) consists of a material that is soft in comparison with steel, preferably aluminium, plastic or a metal-plastic composite.

6. Elevator installation according to one of the preceding claims, **characterized in that** the wedge pocket surface (15, 16) takes the form of an insert plate (25).

7. Elevator installation according to one of the preceding claims, **characterized in that** the suspension means (6) consists of at least two cables (6a) or cable strands (6c) running at a distance from one another and the cable jacket (6b) separates the individual cables (6a) or cable strands (6c) from one another, wherein the suspension means (6) has a longitudinal structure, preferably longitudinal grooves.

8. Elevator installation according to one of the preceding claims, **characterized in that** one end of the suspension means (6) is separated into individual cable or cable-strand runs (24), and **in that** the cable or cable-strand run (24) is respectively clamped by means of an assigned longitudinal wedge groove of the wedge (12) or of the wedge pockets (11).

9. Elevator installation according to one of the preceding claims, **characterized in that** the cable or the cable strand (24) is adhesively bonded, fused or mechanically connected to the cable jacket (6b) in the region of the suspension means end connection (9).

## Revendications

1. Installation d'ascenseur avec une fixation d'une extrémité d'un moyen de portage (9) et un moyen de portage (6),
le moyen de portage (6) se compose d'un câble (6a) ou de torons de câble (6c) et d'une enveloppe de câble (6b), qui entoure le câble (6a) ou les torons de câble (6c),
l'enveloppe de câble (6b) se compose essentiellement d'un thermoplastique ou d'un élastomère,
la fixation d'une extrémité d'un moyen de portage (9) présente un boîtier de coin (10) avec une poche de coin (11) et un coin (12),
le moyen de portage (6) s'étend entre le coin (12) et la poche de coin (11),
dans laquelle le moyen de portage (6) présente un brin libre (7) à son extrémité non chargée, le moyen de portage (6) est guidé, à partir du brin libre (7), autour du coin (12) et se poursuit entre une face de glissement du coin (13.3) et une face de glissement de la poche de coin (16) jusqu'à un brin porteur (8) du moyen de portage (6), et le moyen de portage (6) est maintenu dans la poche de coin (11) au moyen du coin (12), **caractérisée en ce que**
la face de glissement du coin (13.3) située plus près du brin porteur (8) du moyen de portage (6) présente une première zone de surface (13.1) et une deuxième zone de surface (13.4), dans laquelle la première zone de surface (13.1) est disposée près de la zone de la sortie du moyen de portage (6) hors de la fixation d'une extrémité d'un moyen de portage (9) et cette première zone de surface (13.1) présente un angle de coin (□_{K1}) plus grand que la deuxième zone de surface (13.4), qui se raccorde à la première zone de surface (13.1) et qui forme la transition vers une autre zone de surface ou vers une extrémité supérieure de la face de coin (13.3), de telle manière qu'une pression du moyen de portage (6) sur une région de sortie du moyen de portage (6) hors de la fixation d'une extrémité d'un moyen de portage (9) diminue de façon continue.

2. Installation d'ascenseur selon la revendication 1, **caractérisée en ce qu'**une zone du coin (12) ou une zone de la poche de coin (11) est munie d'une gorge de coin longitudinale, dans laquelle
- une face d'adhérence du coin (13.2) ou une face d'adhérence de la poche de coin (15) située plus près du brin libre (7) du moyen de portage (6) est munie d'une gorge de coin longitudinale, et/ou
- la face d'adhérence de la poche de coin (15) et/ou la face d'adhérence du coin (13.2) située plus près du brin libre (7) du moyen de portage (6) est munie d'une profondeur de rugosité accrue par rapport au reste de la surface de la poche de coin (11), et/ou
- la face d'adhérence de la poche de coin (15) et/ou la face d'adhérence du coin (13.2) située plus près du brin libre (7) du moyen de portage (6) est munie de gorges transversales ou de rainures transversales, et/ou
- la face de glissement du coin (13.3) ou la face de glissement de la poche de coin (16) située plus près du brin porteur (8) du moyen de portage (6) est munie de moyens de réduction du coefficient de frottement.

3. Installation d'ascenseur selon l'une quelconque des revendications précédentes, **caractérisée en ce que**
- les extrémités, proches du câble de traction, de la face de glissement du coin (13.3) et de la face de glissement de la poche de coin (16) sont munies de rayons, et/ou
- le coin (12) est de nature élastique, de préférence à son extrémité en forme de coin.

4. Installation d'ascenseur selon l'une quelconque des revendications précédentes, **caractérisée en ce que** la face d'adhérence du coin (13.2) du brin libre (7) est reliée à la face de glissement du coin (13.3) du brin porteur (8) à l'extrémité supérieure du coin (12) au moyen d'un arc de coin (14), qui se raccorde tangentiellement aux faces de coin de part et d'autre (13.2, 13.3) et le rayon de courbure de l'arc (14) diminue en direction de la face d'adhérence du coin (13.3) du brin libre (7).

5. Installation d'ascenseur selon l'une quelconque des revendications précédentes, **caractérisée en ce que** le coin (12) se compose d'un matériau mou par rapport à l'acier, de préférence d'aluminium, de matière plastique ou d'un composite métal-plastique.

6. Installation d'ascenseur selon l'une quelconque des revendications précédentes, **caractérisée en ce que** la face de la poche de coin (15, 16) est réalisée au moyen d'une plaque rapportée (25).

7. Installation d'ascenseur selon l'une quelconque des revendications précédentes, **caractérisée en ce que** le moyen de portage (6) se compose d'au moins deux câbles (6a) ou torons de câble (6c) s'étendant à distance l'un de l'autre et l'enveloppe de câble (6b) sépare les câbles (6a) ou torons de câble (6c) individuels les uns des autres, dans laquelle le moyen de portage (6) présente une structure longitudinale, de préférence des gorges longitudinales.

8. Installation d'ascenseur selon l'une quelconque des revendications précédentes, **caractérisée en ce qu'**une extrémité du moyen de portage (6) est séparée sur des brins de câble ou des brins de torons de câble individuels (24), et **en ce que** le brin de câble ou de toron de câble respectif (24) est serré au moyen d'une gorge de coin longitudinale associée du coin (12) ou de la poche de coin (11).

9. Installation d'ascenseur selon l'une quelconque des revendications précédentes, **caractérisée en ce que** le câble, ou le toron de câble (24) est collé, fusionné ou attaché mécaniquement à l'enveloppe de câble (6b) dans la région de la fixation d'une extrémité d'un moyen de portage (9).
